# EUROPÄISCHE PATENTANMELDUNG

(11) **EP 0 639 861 A1**
(43) Veröffentlichungstag der Anmeldung: **22.02.1995**
(21) Anmeldenummer: 94107889.1
(22) Anmeldetag: 21.05.1994
(51) Int. Cl.: H01M 2/10, B60R 16/04, B60S 5/06

(54) **Trog zur explosionsgeschützten Aufnahme von Akkumulatoren**

(30) Priorität: 13.08.1993 DE 9312089 U
(71) Anmelder: VARTA Batterie Aktiengesellschaft, D-30419 Hannover (DE)
(72) Erfinder: Muck, Heinz-Günther, D-58093 Hagen (DE)
(74) Vertreter: Kaiser, Dieter Ralf, Dipl.-Ing.

(57) **Zusammenfassung**

Ein Trog zur explosionsgeschützten Aufnahme insbesondere von Antriebsbatterien besitzt aufgrund einer am Rande des Trogkastens (1) umlaufenden und in die Trogauskleidung (3) einbezogenen Dichtleiste (2) eine verbreiterte Auflage (5) für den Trogdeckel, welcher aus einem Deckelblech (9) und einem an dessen Unterseite befestigten Rahmen (10) besteht, wobei der Rahmen von Winkelstücken (12,13) gebildet ist, deren hochstehende Schenkel zurückliegen und nach oben zeigende Ausnehmungen (14) aufweisen. Diese Trogkonstruktion verhindert das Entstehen einer Knallgasglocke unter dem Deckel, schützt vor dem Eindringen von Sprühwasser und schließt beim Hantieren die Gefahr des Berührens spannungsführender Teile aus.

## Beschreibung

Die Erfindung betrifft einen Trog zur explosionsgeschützten Aufnahme von Akkumulatoren sowie einen den Trog abschließenden Deckel.

Die grundsätzliche Funktion eines Batterietrogs besteht darin, die einzelnen Akkumulatorenzellen bzw. -batterien im Verband zusammenzuhalten und sie zu einem gemeinsamen Transport geeignet zu machen. Es sind mannigfache Ausführungsformen von Trögen bekannt, beispielsweise gemäß GB-PS 14 25 954 diejenige einer flachen, offenen Wanne oder eine nur auf ihre Umfangswände beschränkte Bahälterform ohne Boden gemäß DE-PS 25 56 339, in welcher die einzelnen Zellen mittels ihrem Gehäuse angeformter Vorsprünge zwischen Querrippen eingehängt sind.

Als Materialien für die Tröge stehen bis zu einer bestimmten Gewichtsgrenze Stahl und Kunststoff als gleichwertig zur Verfügung. Den insbesondere beim Heben auftretenden Zug- und Biegebelastungen ist jedoch Stahl besser gewachsen. Die Wände eines Stahltroges müssen sorgfältig verschweißt sein, damit etwa beim Warten der Zellen auslaufender Elektrolyt nicht den Trog verläßt und in seiner Umgebung Schaden anrichtet. Einen wirksamen Korrosionsschutz bilden auch eine Gummierung oder Innenbeschichtung des Troges.

Bei Antriebsbatterien für Elektrofahrzeuge bieten die Aufnahmetröge nicht nur den notwendigen mechanischen Schutz, sondern sie müssen vor allem dem Schutz vor Explosionen Rechnung tragen. Diese Tröge sind häufig unter dem Fahrersitz installiert oder dienen zugleich als Gegengewicht bei einem Hebefahrzeug (Gabelstapler), wobei gelegentlich noch zusätzliche Gewichte untergebracht werden müssen.

Ein mit Deckel verschließbarer Trog für explosionsgefährdete Räume (Extrog) ist z.B. im deutschen Gebrauchsmuster 77 13 878 beschrieben.

Für den explosionsgeschützen Bereich gelten besondere Vorschriften hinsichtlich des Spritzwasser- und des Berührungschutzes. Ferner darf sich in dem Raume zwischen den Zellenoberkanten und einem aufgelagten Deckel keine Knallgasglocke bilden; dieses Gas ist leicht entzündbar und hochexplosiv.

Es gibt Trogkonstruktionen, bei denen z.B. der Trogoberrand zum Troginnern hin abgekantet ist und die einen den Abkantungen angepaßten Deckel haben. Dabei müssen jedoch Unterbrechungen in der Trogoberrandausführung vorhanden sein, damit eine zuverlässige Gasabführung zwischen den Zellen und dem Trogdeckel gewährleistet ist. Solche abgewinkelten Tröge und Deckel sind in der Herstellung sehr teuer, da im allgemeinen nur kleine Stückzahlen anfallen.

Andere Trogkonstruktionen besitzen ein Gebläse, um das Troginnere ständig zu belüften, und sind dadurch aufwendig.

Der Erfindung liegt die Aufgabe zugrunde, einen Trog für die explosionsgeschützte Aufnahme insbesondere von Antriebsbatterien anzugeben, der leicht herstellbar ist und zusätzlich die Vorschriften für Schutz gegen Eindringen von Wasser und gegen Berührung gefährlicher Teile nach IP 23 (International Protection Code) bzw. DIN 40050, Teil 9, erfüllt.

Die Aufgabe wird anmeldungsgemäß durch einen Trog gelöst, wie er in Anspruch 1 definiert ist.

Danach ist der Trog ein glattwandiger Kasten mit einem Deckel, wobei der obere Kastenrand durch eine umlaufende elastische Dichtleiste, eine verbreiterte Trogkante bildend, verdickt ist und der Deckel aus einem flachen Blech oder einer Platte und einem an deren Unterseite befestigten Rahmen besteht, welcher auf der verbreiterten Trogkante dichtend aufliegt.

Nähere Einzelheiten des Troges gemäß der Erfindung werden anhand einer Figur erläutert.

Dem Trogkasten 1 liegt ein zugeschnittenes Halbzeug-Plattenmaterial (Stahlblech) zugrunde, aus dem, vom Kastenboden ausgehend, die Seitenwände abgekantet und mit den ebenfalls abgekanteten Stirnwänden verbunden werden.

Am oberen Rand des Kastens wird eine umlaufende, elastische Dichtleiste 2 angebracht und somit eine verbreiterte Trogkante geschaffen. Die Dichtleiste kann sowohl innerhalb als auch außerhalb des Troges angebracht werden und hat eine Profildicke von ca. 5mm. Das Material dieser Dichtleiste ist Gummi oder ein elastomerer Kunststoff.

Nachträglich wird der gesamte Trog von innen mit einer elastischen Masse isoliert, wobei die Isolierung 3 die Dichtleiste und sogar den Trogrand bis zur Außenseite mit einbezieht.

Durch die Dichtleiste 2 und die Trogauskleidung 3 erhält die Trogwand 4 eine breite Auflage 5 für den Trogdeckel, welche nach den Prüfbedingungen der Schutzart IP 23 Schutz gegen Eindringen von Wasser gewährleistet.

Der Trog wird vervollständigt durch Hebeelemente 6, Scharniere 7 zur Deckelbefestigung und ein Riegelblech 8 als Teil des Deckelverschlusses.

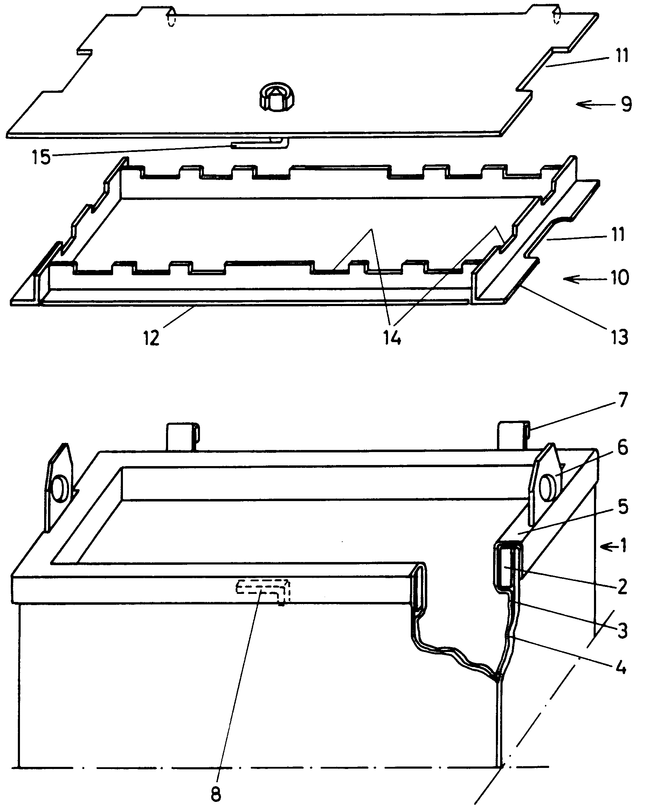

Der Trogdeckel ist in der Figur der besseren Übersicht halber in seine beiden Hauptteile, nämlich ein Deckelblech 9 aus einem Halbzeug-Plattenmaterial und einen Rahmen 10, zerlegt. Deckelblech und Rahmen weisen an ihren Stirn- bzw. Schmalseiten Ausnehmungen 11 für die Aufnahme der Hebeelemente des Troges auf.

Der Rahmen ist an der Unterseite des Deckelblechs befestigt und setzt sich aus zwei längeren Winkelstücken 12 und zwei kürzeren Winkelstücken 13 zusamen. Von allen Winkelstücken ist jeweils der eine Schenkel mit Ausklinkungen 14 versehen, und die Winkelstücke sind im Rahmen so angeordnet, daß die von Ausklinkungen freien Schenkel, von den Ausnehmungen für die Hebeelemente abgesehen, planparallel zum Deckelblech liegen und mit diesem bündig abschliessen, während die Schenkel mit den Ausklinkungen zurückliegen, wobei die Ausklinkungen nach oben zeigen und somit unmittelbar an der Unterseite des Deckelblechs horizontale Öffnungsspalte bilden.

Die von den Ausklinkungen nicht betroffenen Schenkel der Winkelstücke bilden eine umlaufende Dichtkante, mit welcher der Deckel auf der verbreiterten Trogdeckelauflage 5 aufliegt.

Der Vollständigkeit halber zeigt die Figur noch einen ein- und ausschwenkbaren Riegel 15 zum Verschließen des Deckels durch Eingreifen in das Riegelblech. Der Deckelverschluß kann ebenso auf andere Art, z.B. als Stangenschloß, ausgeführt sein.

Dank den Ausklinkungen bzw. Aussparungen wird ein freier Abzug des Knallgases erreicht und keine Gasglocke zwischen den Zellenoberkanten und dem Deckel gebildet. Zur besseren Gasableitung kann das Deckelblech sogar von seiner Mitte aus leicht nach unten durchgebogen sein, um als Leitfläche des Gases zu dienen.

Die Ausklinkungen gewährleisten außerdem aufgrund ihrer zurückgezogenen Anordnung im Rahmen Schutz gegen Sprühwasser. Gemäß IP 23, Kennziffer 3, darf dieses, wenn es in einem Winkel bis zu 60° von der Senkrechten fällt, keine schädlichen Wirkungen haben.

Die Ausklinkungen erfüllen ferner die Schutzvorschriften gemäß IP 23 für das Berühren gefährlicher Teile mit dem Schutzgrad (Kennziffer) 2, welcher fordert, daß ein gegliederter Prüffinger mit 12mm Durchmesser zwar voll eindringen darf, aber ausreichenden Abstand von gefährlichen -hier spannungsführenden- Teilen haben muß. Damit sind Personen, soweit sie den Trog nur zum Zweck des Verladens oder Transportierens handhaben, nicht jedoch mit Werkzeugen (z.B. Schraubendreher) oder gar Drähten umgehen müssen, in dem notwendigen Maße abgesichert.

## Patentansprüche

1. Trog zur explosionsgeschützten Aufnahme von Akkumulatoren mit einem diesen abschließenden Deckel, dadurch gekennzeichnet, daß am oberen Rand der Seitenwände des Troges eine umlaufende elastische Dichtleiste (2) angeordnet ist, und daß als Deckel ein Deckelblech (9) mit einem an seiner Unterseite befestigten Rahmen (10) vorgesehen ist, der auf der verbreiterten Trogkante (5) aufliegt.

2. Trog nach Anspruch 1, dadurch gekennzeichnet, daß der Rahmen von Winkelstücken (12,13) gebildet ist, deren flachliegende Schenkel bündig mit dem Deckelblech abschließen und die auf der verbreiterten Trogkante, die die Dichtungsfläche bildet, aufliegen, und deren hochstehende Schenkel vom Rand des Deckelblechs zurückstehen und mit nach oben zeigenden Ausklinkungen (14) versehen sind.

3. Trog nach den Ansprüchen 1 und 2, dadurch gekennzeichnet, daß der Deckel mittels eines Scharniers (7) befestigt ist und ein Verschlußeinrichtung (8, 15) besitzt.
